# EUROPEAN PATENT SPECIFICATION

(11) **EP 1 414 241 B1**
(45) Date of publication and mention of the grant of the patent: **17.08.2005**
(21) Application number: 02425639.8
(22) Date of filing: 23.10.2002
(51) Int. Cl.: H04N 7/10, H04L 12/28

(54) **System for the transparent transfer of radio frequency signals onto a cabled network**
System zur transparenten Übertragung von Radiofrequenzsignalen auf einem Kabelnetz
Système de transfert transparent de signaux radiofréquences sur un réseau câblé

(43) Date of publication of application: 28.04.2004
(73) Proprietor: FONDAZIONE UGO BORDONI, I-00142 Roma (IT)
(72) Inventor: Di Zenobio, Dario, 01037 Ronciglione VT (IT)
(74) Representative: Leone, Mario

(56) References cited:
- EP-A- 1 047 225
- EP-A- 1 075 109
- WO-A-01/43324
- ESTRIN D L ET AL: "CABLE TELEVISION NETWORKS AS AN ALTERNATIVE TO THE LOCAL LOOP" JOURNAL OF TELECOMMUNICATION, NETWORKS, COMPUTER SCIENCE PRESS INC. MARYLAND, US, vol. 3, no. 2, 1984, pages 103-115, XP002015816

## Description

The present invention refers to a user access system based on wireless technology meeting the IEEE 802.11 b/g standards specifically defined for Wireless Local Area Networks (WLANs), by cabled networks, by adaptation and translation devices of the signals to be carried.

The last few years witnessed the development of a new technology for the construction of networks called Wireless LAN.

A WLAN is a flexible data communications system capable of extending as well as of replacing a wired LAN (cabled LAN) in order to provide additional services.

Through the use of a radio frequency (RF) transmission, a device on a WLAN is capable of transmitting and receiving data transferred via ethernet with no need to use any cabled structure, thereby associating connectivity to user's mobility.

WLANs operate in the 2.4 GHz (for the IEEE 802.11, IEEE 802.11b and IEEE 802.11g protocols) and in the 5 GHz (for the IEEE 802.11a protocol) frequency band ranges, using DSSS (Direct Sequence Spread Spectrum) and FHSS (Frequency Hopping Spread Spectrum) modulations.

It has to be mentioned that the standards adopted for signal transmission on a medium, e.g. a radio medium (IEEE 802.11 b/g standards), are characterised by specific parameters apt to avoid typical anomalies like multiple reflections, refraction, etc., concomitantly meeting predetermined requirements.

WLANs importance mainly lies in the user's option to access the net (and hence shared information and resources) without necessarily being stationary or having to search for an access (phone socket) thereto, and in the provider's option to expand the network at will anytime.

WLANs strong points lie in their features of: mobility, enabling network access anywhere within the coverage area thereof; speed and simplicity of installation, requiring shorter working times and eliminating the need to lay cables; reduced managing costs; scalability, modifications to network configuration being very simple and inexpensive to carry out.

A WLAN mainly consists of two types of devices:

To a first type there belong the 'Adapters', serving as interface between the user and the antenna; the adapter of a wireless device is represented by a waveLAN/ISA CARD for PC (desktop) having an AT/ISA compatible expansion slot, or by a waveLAN USB always for PC (desktop) having an USB port, and lastly by a wave LAN/PCMCIA CARD, for laptop supporting a PC card type II slot. Said WaveLAN cards function properly with all protocols supported by any one Ethernet adapter, and are installed by means of customized drivers.

To a second type there belong the so-called 'Access Points' (AP), equivalent to the HUB on a wired LAN.

Each Access Point supports a variable number of users, up to a maximum of 250 units, by means of a via-antenna RF connection.

The AP device, basically consisting of an antenna, should be located so as to illuminate as broad a space as it possible, hence it is usually located on a wall, or preferably on a roof. Moreover, the network is a cell-type one similar to a mobile phone network. When the former comprises plural APs, said APs should ensure hand-off between a cell and the adjacent one so as to enable a user's roaming in the WLANs.

However, one of the main limitations of a WLAN ensues from the fact that of course the Access Points have a limited range, above all in the presence of obstacles to transmission like walls, ceilings or other concrete structures.

In these cases, a proper operation of the network would require the use of more or less close repeaters in order to provide a stable and continuous connection.

This problem is especially apparent when WLAN signals are to be distributed in buildings, e.g. apartment buildings.

Such a situation would require the prearranging of an elevated number of APs in order to cover all building premises.

European Patent Application n. EP-A-1047225, discloses a system with bi-directional transport of auxiliary signals in a cable TV network, using an existing wireless protocol. However such system, to be functional, needs to process and/or operate a frequency conversion of the signals, translating them in order to be transmitted on the cabled network. In any case, the signal are transmitted on the cable according to a protocol different from the original as defined by the independent claim 1.
An object of the present invention is to overcome said prior art problems, providing an adaptation device of bi-directional high frequency radio signals having their own band allocation and being broadcast according to the IEEE 802.11 b/g standard protocol, for the carrying of said signals on a cabled network, characterised in that it comprises:
a filtering unit, apt to restrict the transmission and/or the reception band to that of the signals inputted to said adaptation device; and
a balancing circuit apt to separate the mass of inputted signals from the mass of outputted signals in order to eliminate unbalanced noise and/or scintillation noise and/or short-duration spikes,
said adaptation device being apt to operate in a bi-directional mode.
A further object of the present invention is to implement a signal coupling system apt to carry on a cabled network bi-directional high frequency radio signals having their own band allocation and being broadcast according to the IEEE 802.11 b/g standard protocol, comprising a radio receiving/transmitting apparatus of said signals, characterised in that it comprises:
an adaptation device of said signals as above defined, connected to said receiving/transmitting apparatus, to carry said signals on said cabled network; and
one or more extraction devices for said signals adapted by said cabled network, to make said signals available to one or more users,
wherein the carrying of said radio signals on said cabled network occurs according to said predefined standard protocol and with the same frequency band allocation of said radio signals.

The main advantage of the present invention lies in the fact that it enables to extend the coverage range of WLANs in buildings, using already existing cabled networks, preferably of coaxial type, like e.g. a centralized or a non-centralized TV equipment.

Moreover, a system according to the present invention enables to cable-transmit signals, generated and standardized to be transmitted by air, in a wholly transparent manner. This without any manipulation or alteration of the signal specifications involved, like: protocols, codification, modulation, power, etc.

Further advantages, features and the modes of employ of the present invention will be made apparent in the following detailed description of a preferred embodiment thereof, given by way of a non-limiting example and making reference to the figures of the annexed drawings, wherein:
figure 1 is a circuit diagram of a first embodiment of an adaptation device according to the present invention;
figure 2a is an exemplary diagram showing the connection of the adaptation device according to the present invention to a WLAN card;
figure 2b is a circuit diagram of a second embodiment of an adaptation device according to the present invention;
figure 3 is a diagram reporting the frequency band allocation of the signals operating in a centralized TV equipment, in the presence of a WLAN signal;
figure 4 is a block diagram of a TV distribution equipment for building comprising a system according to the present invention; and
figure 5 is a block diagram of the head portion of the equipment of Figure 4.

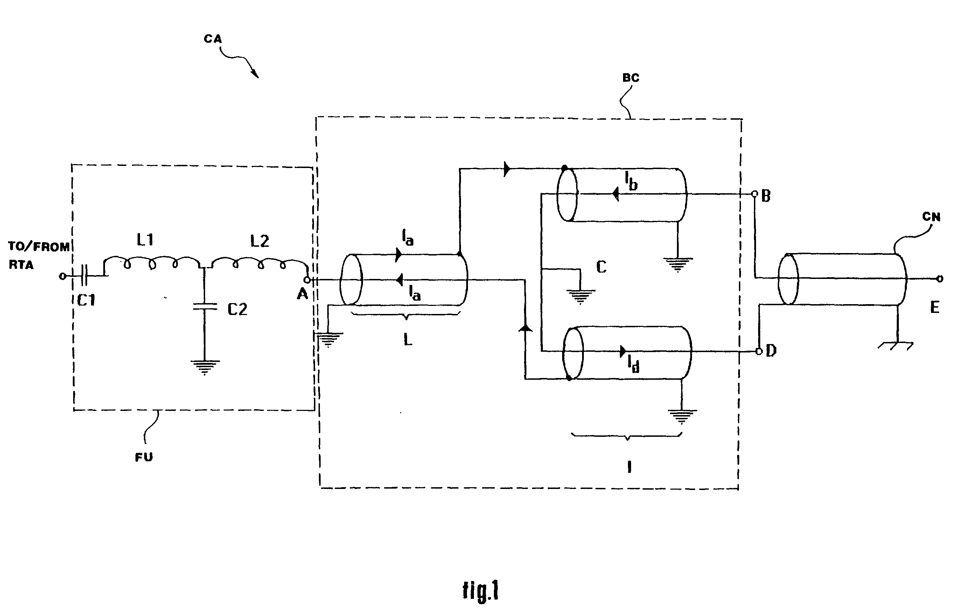

With initial reference to figure 1, a diagram of a device CA for adapting and translating the transmission media according to the present invention is shown.

The device CA is apt to be directly connected to a receiving-transmitting (Rx/Tx) apparatus RTA, e.g. at the outlet of a bridge apparatus or of an access point.

The device CA enables cable transmission of a radio signal meeting the IEEE 802.11 b/g standard, abating media conversion losses to a minimum.

This is made possible by the adaptation and translation functions implemented by the circuit of figure 1. Said functions should be designed according to the nature and to the features of the signal, and should take into account the propagation features of the primitive medium and of the end medium.

In the case at issue, the device CA comprises a filtering unit FU, in the example consisting of the passive elements L1, L2, C1, C2. This filtering unit also adapts the inlet/outlet impedance.

The filtering unit FU restricts the transmission (and/or the reception) band to that of the signal to be treated, concomitantly avoiding spurious signals that might impair the quality of the digital signal, above all in the presence of non-linear passive elements on the cabled network to be operated upon (the linearity of the radio medium is *per se* ideal).

Hence, the L1, L2, C1, C2 values should be computed so as to avoid reflections corrupting the main signal, and to restrict the occupied band to the nominal one of the signal to be adapted to the cabled network.

These values also depend on the output impedance of the WLAN circuits to be adapted. Typical values, for a 50 ohm impedance, are L1 = L2 = 80 nH and C1 = C2 = 39 pF.

Moreover, the device CA comprises a balancing circuit BC apt to operate a translation from single-ended to balanced transmission with mass separation, in order to avoid unbalanced noise (typical in cabled networks), scintillation noise or short-duration spikes. Mass continuity could carry interferences and noise between two distinct four-terminal networks: the Rx/Tx apparatus RTA and the cabled network CN.

To this end, there is provided a balancing circuit BC e.g. implementable by transmission lines (lₐ, l_{b}, l_{d}) of a predefined length (quarter-wave) obtained e.g. with a thin-film technology.

The length L of the transmission lines is computed according to the frequency band and/or range typical of the signal in use.

When L is one quarter-wave long, the points B and D are staggered of +/- 90° and -/+ 90°, and the point C serves as node, thereby attaining a balanced output with a single-ended input and separated masses.

Overall, this circuital arrangement provides a good adaptation and filtering of the bi-directional WLAN signal.

With such filter, to a 2200 MHz frequency there corresponds an attenuation of about 20 dB, whereas the in-band (2400-2485 MHz) connection loss amounts to some dB.

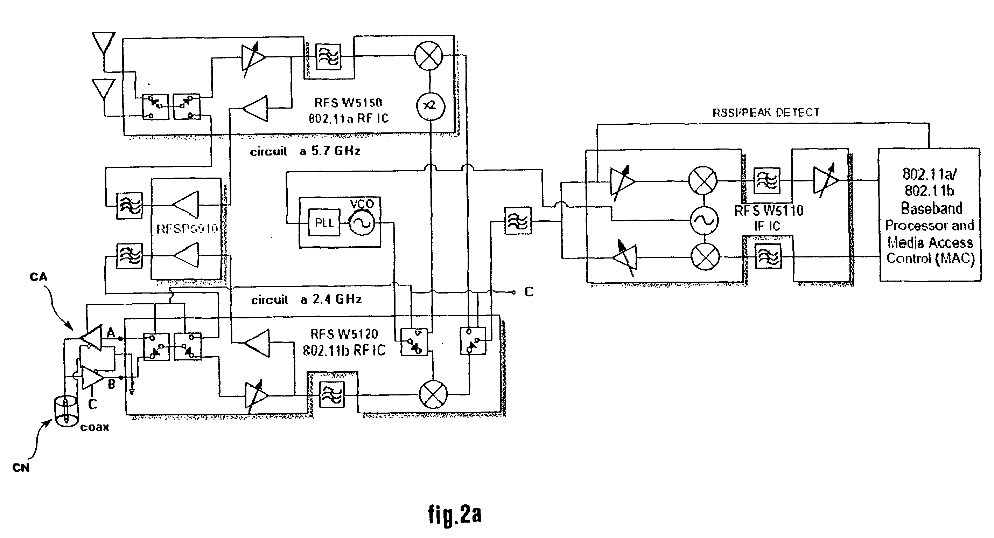

Next, figures 2a and 2b report two viable integration diagrams of an adaptation device according to the present invention in WLAN cards, also of a commercial type.

With reference to the diagram reported in figure 2a, the essential components of a WLAN card are schematically and exemplarily depicted. This card may correspond to a bridge apparatus as well as to a user card.

At the points indicated in figure by A and B, corresponding to the Tx/Rx side of the WLAN card, there is inserted an adaptation device CA according to the present invention consisting of two transconductance amplifying circuits having a 75 Ohm balanced output.

The point C, representing the Tx/Rx switching control, is made available to the output connector in order to suitably activate the amplifiers in transmission and/or reception.

This solution is viable when a direct access to the electronics of the WLAN card is provided, and it implements an active cable adaptation interface that could advantageously be integrated therein.

Next, figure 2b reports a more detailed diagram of a second embodiment of an adaptation device CA according to the present invention.

The circuit of figure 2b and the WLAN card of figure 2a could be connected at the spots indicated by A, B.

The circuit comprises a filtering (bandpass) section made of the group of elements indicated by C1, T1, C2, T2, C3, where T1 and T2 indicate transmission lines operating at 2.45 GHz. Said filter preferably has a 20 dB attenuation at 2200 MHz and a connection loss of some dB.

Moreover, the circuit also comprises a CMM2321-AK two-stage amplifier, with some input/output coupling circuits.

A WLAN card input filter comprising the elements C16, T6, C17, T7, C18 is located onto the reception (Rx) side.

Hence, point E is the outlet onto the network CN, connected to the adapter circuit by a hybrid circuit HC required to carry out mass separation. For clarity's sake, the masses upstream and downstream of the hybrid circuit are indicated by different symbols in the figure.

The hybrid circuit HC should be capable of operating with a low insertion loss in the frequency band of interest. Commercially available SMD elements manufactured by LORCH, EMC, or CTI Communications Technics meet these requirements. The same manufacturers can provide the switch, reported in the figure, apt to deny transmission during a concomitant reception.

Advantageously, both the circuit of figure 1 and that of figure 2b can be used as extraction devices of the signals from the cabled network CN, as interface between the network CN and a WLAN card of a user thereof. This option ensues from the fact that such circuits are apt to operate in a bi-directional mode.

Of course, when used as extraction device of the signals from the cabled network, its 'input' will be the point E and its 'outputs' (Tx/Rx) the points B and A, respectively.

A system according to the present invention finds immediate application, e.g., in the distribution of signals of the abovedescribed type on TV cabled networks, both of a reserved-use (single apartment, mansion, etc.) and of a shared-use, i.e. centralized equipments as those existing in apartment buildings.

In both cases, the abovedescribed devices can find application in translating transparently, i.e. without any operation like: conversions, demodulations, etc., and with passive technique (with no need of feeding), bi-directional high-frequency radio signals (like the IEEE 802.11 a/b/g technology WLANs) on TV coaxial network.

The same devices allow to eliminate impairing reflections, interferences and, above all, marked attenuations like those potentially occurring in an in-air translation, by via-antenna radio signal reception and subsequent on-cable adaptation.

According to this application, a system according to the present invention enables distribution of signals, meeting the IEEE 802.11 b/g standard and generated for operating on WLANs, on traditional antenna equipments for the reception of earth and/or satellite broadcast TV channels.

Two types of TV earth and/or satellite signal broadcasting equipments are currently used in buildings:
1) Centralized shared-antenna equipment, wherein coaxial wiring consists of a main building down-lead (backbone) and of horizontal branches obtained through passive elements (shunts);
2) Single-user customized antenna equipment, wherein to each apartment unit there correspond one or more antennas and one single down-lead connection via a coaxial cable going down from the building roof to the apartment.

The 'adaptation technique' according to the present invention for the coaxial cable transmission of radio signals, operating in the 2400 MHz band, applies both to signals at the outlet of apparatuses (typically 'bridges' or 'access points') located at the head of the centralized TV equipment and serving as Hub, and to commercial WLAN cards, available to a user at a single-apartment level.

Hereinafter, a translation and adaptation device made for the head apparatuses according to what was hereto illustrated with reference to figures 1 and/or 2b will be referred to as 'head unit'.

An extraction device operating at user level will instead be referred to as 'user unit'.

The latter may be integrated in commercial WLAN cards (see exemplary diagram for the case of 802.11b WLAN of figure 2a) or synthesised in a solution combining the usual unmodified WLAN commercial card to an adapting/filtering circuit external thereto, following the exemplifying diagram reported in figure 1.

Hence, for a proper operation each user should have a WLAN card and a signal extraction device, and be enabled to operate with an ID code by the WLAN equipment provider. These coding and recognition modes are typical of 802.11 b/g standard WLANs.

In fact, a factor common to both of the abovedescribed TV equipment typologies (shared equipment, single-user equipment) is the presence of an extant TV equipment infrastructure. A solution according to the present invention can operate in both cases, as long as the coaxial network of the antenna equipment be of a quality sufficing to meet the transmission requisites of the via-cable composite signal, as it is already apparent from the mere broadcasting of the satellite TV signal.

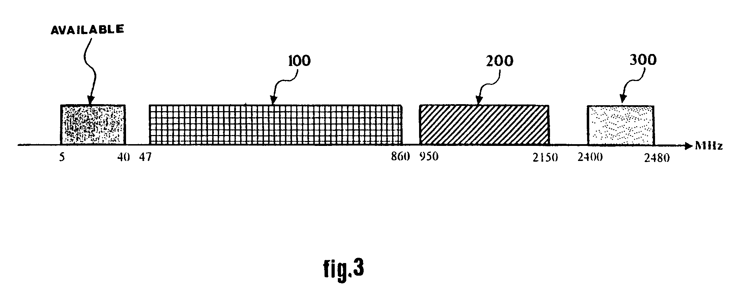

Figure 3 reports a diagram showing the frequency band allocation for various signals, including the WLAN one, which can be integrated on a TV equipment so as to generate a composite broadband signal.
in particular, there may coexist:
a) Earth broadcasting analog TV signals.
   Band allocation for said signals is indicated in the figure by a squared-in rectangle 100.
   The 47-70 MHz band (BI) and the 174-230 MHz band (BIII-VHF) are occupied by TV signals. Generally, the entire 47-230 MHz band may be construed as for TV signals only.
   The 230-470 MHz band is used otherwise, however for simplicity's sake its use will be considered assimilable to the TV one.
   As it is known, signals in (UHF) 470-860 MHz BIV and BV bands are from private and public TVs.
   In general and as abovementioned, alternatively to earth TV channels the 70-460 MHz band may contain digital cable signals, digital or analog satellite channels or otherwise generated multimedia services.
b) Satellite digital and analog TV signals.
   Band allocation for such signals is indicated in the figure by a rectangle with diagonal lines 200. Digital signals occupy a band of 27ö39 MHz per channel, with 6-8 programs per channel. Analog signals occupy a band having the same width but with one program per channel. Both these types of satellite signals have been allocated in the band ranging from 950 to 2150 MHz, with extension thereof provided up to 2300 MHz.
   In some embodiments of specific centralized equipments, the satellite analog TV signals can be allocated to frequency values within Low and High S-band (230ö470 MHz), BIII, BIV and BV (470- 860 MHz) in cases when allocation within such bands does not involve earth TV channels.
c) WLAN signals occupying the 2400-2483.5 MHz band. Band allocation for such signals is indicated in the figure by a dotted rectangle 300.

Evidently, such latter signals do not interfere with the already existing ones, merely being transparently added to the extant band allocation condition, determining a mere connection loss of at most some decibels with respect to the original equipment.

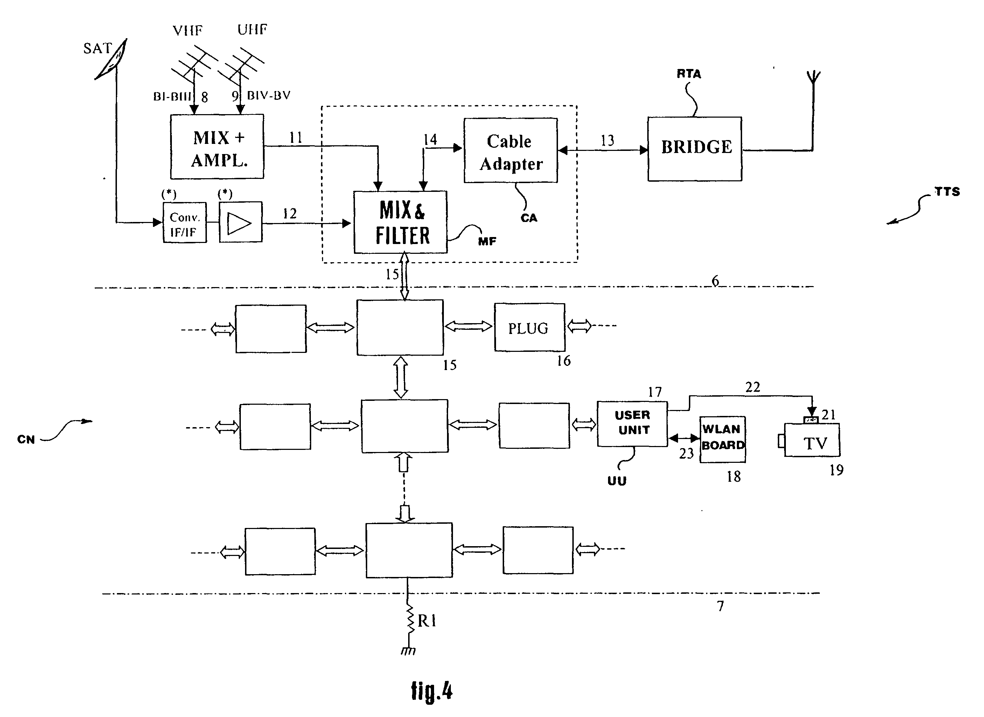

The subsequent figure 4 shows a block diagram of a system TTS according to the present invention, in particular a centralized shared-antenna equipment in the presence of a WLAN signal.

An adaptation device CA (Cable Adapter) is connected to a WLAN signal Rx/Tx apparatus (Bridge).

The head unit further comprises mixing and filtering means MF for the various signals, which mixes the WLAN, satellite and earth TV signals.

The (earth or satellite) TV signals are connected to the unit MF in a manner known to a person skilled in the art, and hence will not be detailed hereinafter.

The multimedia signals from the central WLAN apparatus (Bridge) are connected to the adaptation device CA by a bi-directional connection 13.

The adaptation device CA is connected to the MF unit 1 by a bi-directional connection 14.

The output of the unit MF feeds, by a bi-directional connection 15, a cabled network CN, comprising e.g. one or more equipment backbones and corresponding floor shunts.

The floor shunts and the apartment terminals required to distribute the broadband signal to the users are respectively indicated by numerals 15 and 16.

Such shunts and terminals distribute signals to apartment units so as to hold the same signal power level for each user.

The floor shunts shall have a passband of from 5 to 2500 MHz and their number shall be equal to the number of floors of the building, with an optional floor-by-floor differential branch attenuation.

The feedthrough sockets, known to the art and not shown in the figure, and/or the user terminals are broadband (0-2500 MHz) totally shielded sockets having a low insertion loss, for example TV/SAT sockets manufactured by Telecom & Security.

The branching device 15 at the ground floor is a terminal device, represented in the figure by a connection to ground through a resistor R1.

The system according to the present invention provides that each user be equipped with an extraction device UU (user unit) and a WLAN card 18 for decoding cable-transmitted information.

Then, such latter card will be connected to a stationary or portable computer.
the signals provided by satellite and earth TV antennas are fed to the antenna socket 21 of the TV set 19 directly from the user unit UU.

Alternatively, independent routes can be prearranged for the different signals, thereby reserving the user unit for the sole WLAN signals.

The card 18 is known, and it is generally referred to as 'WLAN card' or 'Wi-Fi".

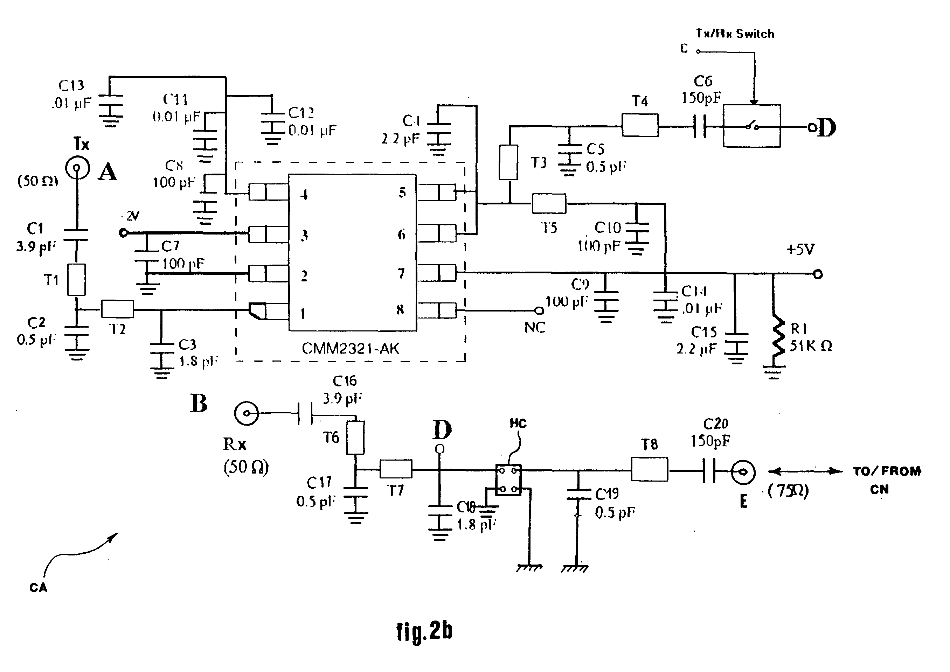

The user unit UU adapts and filters via-cable multimedia signals, as described above with regard to the circuits of figures 1 and 2.

The user unit UU will feed the adapted signal to the WLAN information decoding unit along a bi-directional connection 23.

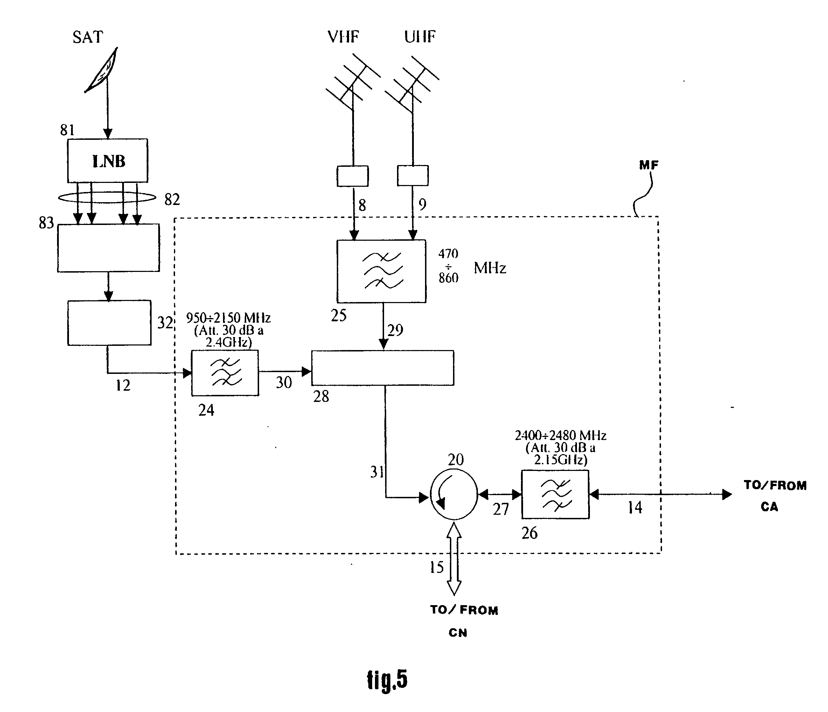

The subsequent figure 5 is a more detailed block diagram of the head portion of the equipment of figure 4, describing the mixing and filtering means (MF) apt to couple (earth or satellite) TV signals to WLAN signals on the network CN.

To this end, there is provided a first earth and satellite TV signal mixing and filtering section with a mixer 28.

Downstream of the mixer 28 there is advantageously provided a circulator 20, apt to couple the signal at the output of the mixer 28 to the bi-directional WLAN signal outputted by the adaptation device CA (head unit).

The circulator/combiner 20 is made so as to prevent the bottom-to-top up-stream flow from transiting via the connection 31.

The circulator/combiner could e.g. be assembled from P2 and MDS Telecom & Security or Fait products, or alike products manufactured by RAYCHEM or RADIOSHACK.

In general, the present invention can also find application in TV and WLAN distribution systems for a building provided with single-user customized antenna television equipments.

The present invention was hereto described according to preferred embodiments thereof, given by way of non-limiting examples.

It is to be understood that other embodiments may exist, all falling within the protective scope thereof, as defined by the appended claims.

## Claims

1. An adaptation device (CA) adapting bi-directional high frequency radio signals according to the IEEE 802.11 b/g standard protocol, to be carried on a cabled network (CN), without protocol alteration of the signals comprising:
a filtering unit (FU), adapted to restrict the transmission and/or the reception band to that of the signals inputted to said adaptation device (CA); and
a balancing circuit (BC) adapted to separate the mass of inputted signals from the mass of outputted signals in order to eliminate unbalanced noise and/or scintillation noise and/or short-duration spikes,
said adaptation device (CA) being adapted to operate in a bi-directional mode.

2. The adaptation device (CA) according to claim 1, wherein said radio signals occupy a frequency band ranging from 2400 to 2485 MHz.

3. The adaptation device (CA) according to claim 1 or 2, wherein said filtering unit (FU) comprises a passive element circuit.

4. The adaptation device (CA) according to claim 3, wherein said passive element circuit is of LC type.

5. The adaptation device (CA) according to claim 3, wherein said passive element circuit comprises capacitor elements and transmission lines.

6. The adaptation device (CA) according to any one of the claims 1 to 5, wherein said balancing circuit (BC) comprises one or more transmission lines (lₐ, l_{b}, l_{d}) of a predefined length, said length being computed according to the frequency band and/or range typical of said signals.

7. The adaptation device (CA) according to claim 6, wherein said transmission lines (lₐ, l_{b}, l_{d}) have a length equal to one quarter-wave.

8. The adaptation device (CA) according to claim 6 or 7, wherein said transmission lines (lₐ, l_{b}, l_{d}) are obtained with a thin-film technology.

9. The adaptation device (CA) according to any one of the claims 1 to 8, wherein said balancing circuit (BC) comprises a two-stage amplifier (CMM2321-AK).

10. The adaptation device (CA) according to any one of the claims 1 to 9, wherein said balancing circuit (BC) comprises a hybrid circuit (HC), interposed between said cabled network (CN) and said filtering unit, said hybrid circuit (HC) being apt to separate the mass of the inputted signals from the mass of the outputted signals.

11. A signal coupling system (TTS) adapted to carry on a cabled network (CN) bi-directional high frequency radio signals having their own band allocation and being broadcast according to the IEEE 802.11 b/g standard protocol, comprising a radio receiving/transmitting (Rx/Tx) apparatus (RTA) of said signals, comprising:
an adaptation device (CA) of said signals according to any one of the claims 1 to 10, connected to said receiving/transmitting apparatus (RTA), to carry said signals on said cabled network (CN); and
one or more extraction devices (UU) for said signals adapted by said cabled network (CN), to make said signals available to one or more users,
wherein the carrying of said radio signals on said cabled network (CN) occurs according to said predefined standard protocol and with the same frequency band allocation of said radio signals.

12. The system according to claim 11, wherein said radio signals occupy a frequency band ranging from 2400 to 2485 MHz.

13. The system according to claim 11 or 12, wherein each of said extraction devices (UU) comprises at least one adaptation device (CA) according to any one of the claims 1 to 11.

14. The system according to any one of the claims 11 to 13, wherein said cabled network (CN) is a coaxial network for the household distribution of TV signals.

15. The system according to any one of the claims 11 to 14, further comprising mixing and filtering means (MF) apt to couple further signals to said radio signals on said cabled network (CN).

16. The system according to claim 15, wherein said further signals are TV, earth or satellite signals.

17. The system according to claim 16, wherein said mixing and filtering means (MF) comprises a circulator (20), apt to couple said TV signals to said radio signals so as to avoid interactions between the signal flows.

## Patentansprüche

1. Anpassungseinrichtung (CA), die bidirektionale Hochfrequenz-Funksignale gemäß dem Standardprotokoll IEEE 802.11 b/g anpasst, um sie in einem Kabelnetz (CN) ohne Protokolländerung der Signale zu leiten, und die umfasst:
eine Filtereinheit (FU), die so eingerichtet ist, dass sie das Sende- und/oder das Empfangsband, auf das der durch die Anpassungseinrichtung (CA) eingegebenen Signale beschränkt; und
eine Ausgleichsschaltung (BC), die so eingerichtet ist, dass sie die Masse der eingegebenen Signale von der Masse ausgegebener Signale trennt, um unausgeglichenes Rauschen und/oder Szintillations-Rauschen und/oder kurzzeitige Impulsspitzen zu beseitigen,
wobei die Anpassungseinrichtung (CA) so eingerichtet ist, dass sie in einem bidirektionalen Modus arbeitet.

2. Anpassungseinrichtung (CA) nach Anspruch 1, wobei die Funksignale ein Frequenzband einnehmen, das von 2400 bis 2485 MHz reicht.

3. Anpassungseinrichtung (CA) nach Anspruch 1 oder 2, wobei die Filtereinheit (FU) eine Schaltung aus passiven Bauelementen umfasst.

4. Anpassungseinrichtung (CA) nach Anspruch 3, wobei die Schaltung aus passiven Bauelementen vom LC-Typ ist.

5. Anpassungseinrichtung (CA) nach Anspruch 3, wobei die Schaltung aus passiven Bauelementen Kondensatorelemente und Übertragungsleitungen umfasst.

6. Anpassungseinrichtung (CA) nach einem der Ansprüche 1 bis 5, wobei die Ausgleichsschaltung (BC) eine oder mehrere Übertragungsleitungen (lₐ, l_{b}, l_{d}) einer vorgegebenen Länge umfasst und die Länge entsprechend dem Frequenzband und/oder -bereich berechnet wird, das/der typisch für die Signale ist.

7. Anpassungseinrichtung (CA) nach Anspruch 6, wobei die Übertragungsleitungen (lₐ, l_{b}, l_{d}) eine Länge haben, die einer Viertelwelle entspricht.

8. Anpassungseinrichtung (CA) nach Anspruch 6 oder 7, wobei die Übertragungsleitungen (lₐ, l_{b}, l_{d}) mit einem Dünnschichtverfahren erzeugt werden.

9. Anpassungseinrichtung (CA) nach einem der Ansprüche 1 bis 8, wobei die Ausgleichsschaltung (BC) einen zweistufigen Verstärker (CMM2321-AK) umfasst.

10. Anpassungseinrichtung (CA) nach einem der Ansprüche 1 bis 9, wobei die Ausgleichsschaltung (BC) eine Hybridschaltung (AC) umfasst, die zwischen dem Kabelnetz (CN) und der Filtereinheit angeordnet ist, und sich die Hybridschaltung (AC) dazu eignet, die Masse der eingegebenen Signale von der Masse der ausgegebenen Signale zu trennen.

11. Signalkopplungssystem (TTS), das so eingerichtet ist, dass es in einem Kabelnetz (CN) bidirektionale Hochfrequenz-Funksignale leitet, die ihre eigene Bandzuteilung haben und entsprechend dem Standardprotokoll IEEE 802.11 b/g gesendet werden, das eine Funk-Empfangs-/Sende (Rx/Tx)-Vorrichtung (RTA) der Signale umfasst, und das umfasst:
eine Anpassungseinrichtung (CA) der Signale nach einem der Ansprüche 1 bis 10, die mit der Empfangs-/Sendevorrichtung (RTA) verbunden ist, um die Signale in dem Kabelnetz (CN) zu leiten; und
eine oder mehrere Extrahiereinrichtungen (UU) für die durch das Kabelnetz (CN) angepassten Signale, um die Signale für einen oder mehrere Benutzer verfügbar zu machen,
wobei das Leiten der Funksignale in dem Kabelnetz (CN) entsprechend dem vordefinierten Standardprotokoll und mit der gleichen Frequenzbandzuteilung der Funksignale stattfindet.

12. System nach Anspruch 11, wobei die Funksignale ein Frequenzband einnehmen, das von 2400 bis 2485 MHz reicht.

13. System nach Anspruch 11 oder 12, wobei jede der Extrahiereinrichtungen (UU) wenigstens eine Anpassungseinrichtung (CA) nach einem der Ansprüche 1 bis 11 umfasst.

14. System nach einem der Ansprüche 11 bis 13, wobei das Kabelnetz (CN) ein koaxiales Netz für die Verteilung von Fernsehsignalen in Haushalten ist.

15. System nach einem der Ansprüche 11 bis 14, das des Weiteren eine Misch-und-Filter-Einrichtung (MF) umfasst, die sich dazu eignet, um weitere Signale zu den Radiosignalen in dem Kabelnetz (CN) zu koppeln.

16. System nach Anspruch 15, wobei die weiteren Signale terrestrische oder Satelliten-Fernsehsignale sind.

17. System nach Anspruch 16, wobei die Misch-und-Filter-Einrichtung (MF) einen Zirkulator (20) umfasst, der sich dazu eignet, um die Fernsehsignale zu den Funksignalen zu koppeln und so Wechselwirkungen zwischen den Signalströmen zu vermeiden.

## Revendications

1. Un dispositif d'adaptation (CA) qui adapte les signaux radio bidirectionnels de haute fréquence conformément au protocole standard IEEE 802,11 b/g doit être appliquer à un network câblé (CN), sans un protocole d'altération des signaux, comprenant une unité de filtrage (FU), adaptée pour limiter la bande de transmission et/ou la bande de réception vers la bande des signaux d'entrée à ce dispositif d'adaptation (CA); et un circuit d'oscillation (BC) adapté pour séparer la masse des signaux entrant de la masse des signaux sortant de façon à éliminer les bruitages non oscillants et/ou les bruitages grinçants et/ou les spikes de brève durée,
ce dispositif d'adaptation (CA) doit être adapté pour être opératif en modalité bidirectionnelle.

2. Le dispositif d'adaptation (CA) selon la revendication 1, là où le protocole mentionné occupe une bande de fréquence allant de 2400 à 2485 MEz.

3. Le dispositif d'adaptation (CA) selon les revendications 1 ou 2, où l'unité de filtrage mentionnée (FU) contient un élément passif de circuit.

4. Le dispositif d'adaptation (CA) selon la revendication 3, où l'élément passif de circuit mentionné est du genre LC.

5. Le dispositif d'adaptation (CA) selon la revendication 3, où l'élément passif de circuit mentionné contient un élément de capacité et des lignes de transmission.

6. Le dispositif d'adaptation (CA) selon l'une des revendications de 1 à 5, où le circuit oscillant (BC) contient une ou plusieurs lignes de transmission (lₐ,l_{b},l_{d}) de longueur prédéfinie, cette longueur étant calculée selon la bande de fréquence et/ou la gamme de fréquence des signaux mentionnés.

7. Le dispositif d'adaptation (CA) selon la revendication 6, où les lignes de transmission (lₐ, l_{b}, l_{d}) ont une longueur pareille à un quart d'onde.

8. Le dispositif d'adaptation (CA) selon les revendications 6 ou 7, où les lignes de transmission mentionnées (lₐ, l_{b}, l_{d}) sont obtenues en utilisant un film de technologie ultra plate.

9. Le dispositif d'adaptation (CA) selon l'une des revendications de 1 à 8, où le circuit oscillant mentionné comprend un amplificateur à deux étapes (CMM2321-AK).

10. Le dispositif d'adaptation (CA) selon l'une des revendications de 1 à 9, là où le circuit oscillant (BC) mentionné inclus un circuit hybride (HC), interposé entre le network câblé mentionné (CN) et l'unité de filtrage mentionnée, ce circuit hybride (HC) étant capable de séparer la masse des signaux d'entrée de celle des signaux de sortie.

11. Un système de couplage des signaux (TTS) adapté à transférer à un network câblé (CN) des signaux radio bidirectionnels de haute fréquence ayant leur propre occupation de bande et étant diffusés selon le protocole standard IEEE 802.11 b/g, comprenant un apparat (RTA) de rice-transmission (Rx/Tx) des signaux mentionnés, comprenant :
un dispositif d'adaptation (CA) des signaux mentionnés selon l'une des revendications de 1 à 10, relié à l'apparat de rice-transmission (RTA) pour diffuser les signaux mentionnés sur le network câblé mentionné (CN) ; et
un ou plusieurs dispositifs d'extraction (UU) pour les signaux mentionnés adapté par le network câblé mentionné (CN) afin de rendre disponible les signaux mentionnés à un ou plusieurs usagés,
où la diffusion des signaux radio mentionnés sur le network câblé (CN) se produit selon un protocole standard prédéfini et avec la même occupation de bande de fréquence des signaux radio mentionnés.

12. Le système selon la revendication 11, où les signaux radio occupent une bande de fréquence allant de 2400 à 2485 MHz.

13. Le système selon une des revendications 11 ou 12, où chacun des dispositifs d'extraction (UU) comprend au moins un dispositif d'adaptation (CA) selon l'une des revendications de 1 à 11.

14. Le système selon l'une des revendications de 11 à 13, où le network câblé mentionné (CN) est un network coaxiale pour la distribution domestique des signaux télévisés.

15. Le système selon l'une des revendications de 11 à 14, comprenant en sus des moyens de mixage et de filtrage (MF), capable de coupler les signaux télévisés mentionnés avec les signaux radio mentionnés on le network câblé mentionné.

16. Le système selon la revendication 15, où le sus signaux sont signaux télévisés, signaux terrestres et satellite.

17. Le système selon la revendication 16, où le moyens de mixage et de filtrage (MF) comprennent un circulateur (20), adapté pour coupler les signaux télévisés mentionnés aux signaux radio mentionnés afin d'éviter des interactions entre les flux de signaux.
